# EUROPÄISCHE PATENTANMELDUNG

(11) **EP 0 779 137 A1**
(43) Veröffentlichungstag der Anmeldung: **18.06.1997**
(21) Anmeldenummer: 96890180.1
(22) Anmeldetag: 04.12.1996
(51) Int. Cl.: B29C 31/00, B29C 51/08, B29C 51/22, B29D 22/00, B29K 23/00

(54) **Verfahren und Vorrichtung zum Herstellen von Luftpolsterfolien**

(30) Priorität: 13.12.1995 AT 2012/95
(71) Anmelder: Jung, Wilfried, 5144 Handenberg (AT)
(72) Erfinder: Jung, Wilfried, 5144 Handenberg (AT)
(74) Vertreter: Hübscher, Heiner, Dipl.-Ing.

(57) **Zusammenfassung**

Bei einem Verfahren zum Herstellen von Luftpolsterfolien finden wenigstens zwei Folienbahnen (1, 2) aus dünnem Niederdruckpolyethylen Verwendung. Wenigstens die eine Folienbahn (1) wird bei ihrem Durchlauf zwischen zwei zusammenwirkenden, beheizten Formwalzen (7,8), deren eine (7) als Negativwalze Vertiefungen (11) und deren andere (8) als Positivwalze konvexe Erhebungen (10) aufweist, in einem Ziehvorgang mit ein über die Bahnbreite verteiltes Muster ergebenden, tiefgezogenen Ausformungen (3) versehen und dann mit der zweiten Folienbahn (2) mittels einer ebenfalls beheizten, am Umfang der Negativwalze (8) der Positivwalze (7) in Durchlaufrichtung nachgeordneten Andrückwalze (9), über welche die zweite Folienbahn läuft, mit dieser zweiten Folienbahn an den Rändern der Ausformungen (3) folgenden Stegen unter Abschluß der Ausformungen zu Luftpolstern durch Schweiß- oder Siegelnähte verbunden. Zur Erzielung günstigenr Eigenschaften der Luftpolsterfolie und zur Vereinfachung der Herstellung erhalten die Negativwalze (8) und bzw. oder die über sie geführte Folienbahn (1) eine elektrostatische Aufladung, welche die Ausformungen (3) vor und während der Bildung der Schweiß- bzw. Siegelnähte in die Vertiefungen (12) der Negativwalze (8) hineinzieht und festhält. Eine Vorrichtung zur Durchführung des Verfahrens ist angegeben.

## Beschreibung

Die Erfindung betrifft ein Verfahren zum Herstellen von Luftpolsterfolien nach dem Oberbegriff des Patentanspruches 1.

Die Erfindung betrifft ferner eine Vorrichtung nach dem Oberbegriff des Patentanspruches 9.

Ein Verfahren und eine Vorrichtung dieser Art sind aus der DE 41 14 506 A1 bekannt. Der grundsätzliche Vorteil der entsprechend hergestellten Luftpolsterfolien besteht darin, daß sie aus sehr dünnen Folien aus umweltfreundlichem Niedruckpolyethylen hergestellt werden können, welches Material umweltfreundlich entsorgt werden kann und ein äußerst geringes Flächengewicht der fertigen Luftpolsterfolie bedingt.

Bei dem bekannten Verfahren werden Luftpolster mit quadratischem Grundriß erzeugt, was bedeutet, daß hier die Schweiß- bzw. Siegelnähte in einem entsprechenden Raster in Quer- und Längsrichtung der fertigen Luftpolsterfolie verlaufen. Nachteilig bei der bisherigen Art der Herstellung wirkt sich die Tatsache aus, daß bei Verwendung derartig dünner Folien die Ausformungen nicht formstabil hergestellt werden können, was bedeutet, daß sie bereits nach dem Austritt der Erhebungen der Positivwalze aus ihnen zu Verformungen neigen und nicht, wie dies erwünscht wäre, bis zur Verschweißung mit der Deckfolie ihre satte Anlage in den Vertiefungen der Negativwalze beibehalten. Es kommt auch zu geringen seitlichen Verstellungen. Aus allen diesen Gründen ist es notwendig, relativ breite, meist wenigstens 2 mm breite Stege zu verwenden, wodurch sich ein relativ ungünstiges Verhältnis der fertigen Folie in bezug auf die tatsächliche Polsterfläche zur Stegfläche ergibt und damit die Polstereigenschaften verringert werden. Überdies lassen sich die Luftpolster aus der erwähnten Nachgiebigkeit heraus für den Gebrauch nicht hinreichend prall mit Luft füllen. Beim Tiefziehvorgang wird zur Bildung der Ausformungen Material in etwa gleichem Ausmaß sowohl von der nachfolgenden Länge der Folienbahn als auch von der Breite der Folienbahn her eingezogen, so daß die fertige Luftpolsterfolie eine geringere Breite als die herangeführte Folienbahn aufweist und, was wesentlich nachteiliger ist, sich im Randbereich ungenaue Ausformungen ergeben bzw. eine Welligkeit der Außenränder der fertigen Luftpolsterfolie auftritt, so daß die äußeren Randbereiche der ohnehin schon schmäler gewordenen Luftpolsterfolie nicht voll einsatzfähig sind und oft durch Zuschnitt begradigt werden müssen. Die ungenaue Randausformung hat aber auch noch weitere Ursachen. Vor allem kommt es bei der bisherigen Vorrichtungsausbildung durch Antriebsköpfe an den Enden der meist massiven Walzen zu Wärmeableitungen bzw. allgemein zur Einhaltung anderer Temperaturen als im mittleren Walzenbereich, so daß hier ein anderer Verformungsgrad der Folie auftritt. Anderseits haben das bekannte Verfahren und die zu seiner Durchführung bestimmte Vorrichtung bestechende Vorteile gegenüber anderen bekannten Herstellungsverfahren für Luftpolsterfolien aus anderem Material, z.B. LD-PE und LLD-PE (Polyethylen niedriger oder sehr niedriger Dichte), bei denen sehr dicke Folien verwendet werden müssen, damit die Ausformungen und die mit ihnen versehene Folie schon vor dem Zusammenfügen mit der Deckfolie formstabil sind, wobei hier die Ausformungen in einem Vakuumtiefziehverfahren hergestellt werden, bei dem im Durchlaufbereich an die Vertiefungen der Negativwalze über eigene Zuleitungen ein Vakuum angelegt wird. Bei den beim gegenständlichen Verfahren verwendeten sehr dünnen Folien wäre die Vakuumverformung nicht nur wegen des wesentlich höheren Anlagenaufwandes, sondern auch deshalb kaum anwendbar, weil die dünnen Folien sich unter der Vakuumeinwirkung nicht wunschgemäß an die Form der Vertiefungen anpassen, also keine einwandfreie Anlage an den Vertiefungen bilden.

Aufgabe der Erfindung ist die Schaffung eines Verfahrens und einer zu seiner Durchführung geeigneten Vorrichtung, mit dessen bzw. deren Hilfe Luftpolsterfolien der gegenständlichen Art bei einem optimalen Verhältnis der Polsterflächen zu den Stegflächen formgenau hergestellt werden können, wobei eine pralle Füllung der Luftpolster eingehalten werden kann, auch die Randbereiche der Luftpolsterfolie voll funktionsfähig ausgeformt bzw. hergestellt werden und Beschädigungen bzw. Verringerungen der Folienfestigkeit und - dicke bei der Herstellung weitgehend vermieden werden.

Die gestellte Aufgabe wird verfahrensmäßig prinzipiell durch die Verfahrensschritte des Patentanspruches 1 gelöst.

Bei dem erfindungsgemäßen Verfahen wird vor allem angestrebt, auf den zueinander weisenden Flächen der Negativwalze und der über sie geführten Folienbahn gegensätzliche Aufladungen zu erzeugen, durch die es zu der erwünschten Anziehung kommt. Für die Erzeugung dieser Aufladungen können an sich bekannte oder leicht modifizierte Elemente Verwendung finden, die nur geringe Zusätze im Aufbau der notwendigen Vorrichtung erfordern und eine wesentlich einfachere Gesamtkonstruktion ergeben als Vakuum-Tiefziehwalzen. Im Normalfall wird man die gesamte Oberfläche der Negativwalze mit einer Ladung versehen. Es ist für besondere Aufgaben aber auch möglich, nur partiell elektrostatische Aufladungen auf der Walze zu erzeugen. Dies läßt sich etwa dadurch erreichen, daß nur die aufzuladenden Bereiche der Negativwalze eine ein Dielektrikum darstellende Beschichtung, z.B. aus Teflon, erhalten. Eine entsprechende Maßnahme kann sinnvoll sein, wenn man nur den Mantel, nicht aber den in die Negativwalze einragenden Kappenteil der Ausformungen beim Schweißvorgang möglichst genau festhalten will. Jedenfalls wird es möglich, die Erhebungen so einzustellen, daß sie das größtmögliche Füllvolumen vor dem Schließen zur Luftpolsterfolie erhalten.

Eine bevorzugte Ausführungsform ist in Anspruch 2 angegeben.

Auf- bzw. Entladegeneratoren mit entsprechenden Elektroden finden an sich bei elektrostatischen Kopierern und sonstigen Bauteilen der Elektrofotografie zur Aufladung des Bildträgers Verwendung. Sie bestehen im einfachsten Fall aus einem an eine Hochspannungsquelle angeschlossenen Draht. Meist sind aber in einem Gehäuse mehrere Drähte bzw. Elektroden vorhanden, die abstandsweise mit zur aufzuladenden Fläche gerichteten Spitzen versehen werden, wobei es zur Vergleichmäßigung der Aufladung auch bekannt ist, die Elektroden in ihrer Längsrichtung schwingend anzutreiben. Für den vorliegenden Fall ergibt sich die anzulegende Spannung aus der Materialbeschaffenheit und dem Abstand der Elektroden von Folienbahn und Walze. Es ist ohne weiteres möglich, mit Hilfe eines Generators über Elektroden sowohl die Folie als auch die isolierende Beschichtung der Walze aufzuladen. Normalerweise wird mit Spannungen in der Größenordnung zwischen 15 und 60 kV gearbeitet, wobei diesen Gleichspannungen auch Wechselspannungen überlagert sein können. Nach einer Variante sind eigene Elektroden zur Auf- bzw. Entladung der Walze und der Folie möglich. Die Entladung der Walze wird vorgesehen, um möglichst konstante Arbeitsbedingungen zu erhalten, d.h. um die Aufladung nicht durch undefinierbare Restladungen zu verändern.

Wegen der durch die Aufladung erzielten genauen Ausrichtung der mit den Ausformungen versehenen Folienbahn während des Schweiß- bzw. Siegelvorganges ist es auch möglich, die Breite der die einzelnen Luftpolster abschließenden Schweiß- bzw. Siegelnähte zu verringern, da gewährleistet wird, daß auch bei dünnen Siegelnähten die beiden Folien sicher dicht verbunden werden. Somit können die Schweiß- bzw. Siegelnähte gemäß Anspruch 3 erzeugt werden.

Zur Erzielung eines besonders hohen Füllungsgrades und eines noch günstigeren Verhältnisses der Polsterflächen zu den von Nähten eingenommenen Flächen wird nach Anspruch 4 vorgegangen. Bei einem Sechseck ist bekanntlich die Umfangslänge einer bestimmten Flächeneinheit kleiner als bei einem vergleichbaren Quadrat. Beim erfindungsgemäßen Verfahren wird durch diese Form der besondere Vorteil erzielt, daß an keiner Stelle des Polstermusters linear in irgendeiner Richtung über die Folie durchlaufende Schweiß- bzw. Siegelnähte vorhanden sind. Durch die besondere Anordnung des Musters wird bei der Bildung der Ausformungen das Nachziehen des Materials aus der noch unverformten Folienbahn begünstigt und es zeigt sich kaum das Bestreben, das zur Bildung dieser Ausformungen benötigte Material aus der Folienbreite zu gewinnen. Ein entsprechendes Nachziehen der Folie aus der Breite wird überdies durch die schräg zur Folienbreite verlaufenden Sechseckseiten vermieden.

Vorteilhaft werden bei dem erfindungsgemäßen Verfahren Materialien nach Anspruch 5 verwendet.

Die mit den Ausformungen versehene Folie kann beispielsweise eine Dicke von 15µ aufweisen. Für die Deckfolie wird eine etwas dünnere Folie verwendet, die als Zweischichtenfolie ausgeführt sein kann oder mit einer entsprechenden Beschichtung versehen wird. Durch Verwendung einer entsprechenden Beschichtung wird es in der Praxis möglich, die Walzentemperaturen, die bei der Verschweißung von HDPE allein beispielsweise etwa über 130 °C betragen müßten, wegen des niedrigeren Schmelzpunktes der Beschichtung, die dann die Siegelnaht erzeugt, um wenigstens 20 - 30 °C, also z.B. auf 100 °C, herabzusetzen. Dies bedingt anderseits wieder eine Verbesserung der Formhaltigkeit der vorgefertigten Ausformungen, eine wesentliche Energieeinsparung bei erhöhter Betriebssicherheit und als entscheidenden Punkt die Tatsache, daß das die Luftpolster ausfüllende Gas vor dem Verschließen der Ausformungen zu den Luftpolstern eine relativ niedrige Temperatur hat, so daß der Volumensverlust bei der Abkühlung auf die Raumtemperatur bzw. die Arbeitstemperatur wesentlich geringer ist als bei höheren Verformungs- bzw. Schweißtemperaturen.

Der Füllungsgrad wird durch die Weiterbildung der Erfindung nach Anspruch 6 weiter verbessert. Bei der Lagerung einer in dieser Weise hergestellten Luftpolsterfolie kann der Sauerstoff der Umgebungsluft in die ursprüngliche Stickstoffatmosphäre in den Luftpolsters eindiffundieren, bis praktisch auch die Füllung den gleichen Sauerstoffgehalt wie die Umgebungsluft aufweist. Dies bedeutet aber eine Volumsvergrößerung des Luftpolsterinhaltes um wenigstens 20 % und damit eine wesentliche Verbesserung des Füllungsgrades. Beim oben angeführten praktischen Beispiel der verwendeten Folien ist der Gasausgleich, also die Sauerstoffaufnahme, der Polster im wesentlichen nach 4 - 6 Stunden nach Schließen der Luftpolster abgeschlossen.

Der Stickstoff kann, wie in Anspruch 7 angegeben, eingeblasen werden.

Wie schon eingangs erwähnt wurde, ist das erfindungsgemäße Verfahren nicht auf die Verwendung von zwei Folien beschränkt. Eine aus zwei Folien hergestellte Luftpolsterfolie hat an der einen Seite die im wesentlichen glatte Oberfläche der Abschlußfolie und an der anderen Seiten als vorstehende Noppen die Luftpolster. Man kann nun eine für manche Zwecke günstige beidseits glatte Luftpolsterfolie durch den Verefahrensschritt nach Anspruch 8 erzeugen. In manchen Fällen kann es vorteilhaft sein, die Deckfolie als Klebefolie auszubilden, um eine abermalige Erwärmung der schon geschlossenen Luftpolster auf die Schweißbzw. Siegeltemperaturen zu vermeiden.

Eine zur Durchführung des erfindungsgemäßen Verfahrens bestimmte Vorrichtung ist in Anspruch 9 angegeben. Die Wirkung der Generatoren und Elektroden wurde vorstehend schon beschrieben. Zusätzlich wird durch den Spaltabstand der Erhebungen in den Vertiefungen der Negativwalze gewährleistet, daß die hier der Verformung unterzogene Folie nicht übermäßig beansprucht und insbesondere nicht gequetscht oder abgeschert wird. Überdies wird das Nachziehen der Folie aus der zulaufenden Bahn her begünstigt.

Stickstoff kann mit der Ausführung nach Anspruch 10 zugeführt werden.

Eine weitere Schonung der Folie bei der Verformung ergibt sich durch eine Ausbildung der Vorrichtung nach Anspruch 11. Es wird dadurch auch der Verformungsvorgang vergleichmäßigt, wobei insbesondere ruckartige Belastungen der Folie eliminiert sind.

Durch Einstellungen nach Anspruch 12 kann die gewünschte Tiefe der Ausformungen und damit im Endeffekt das Füllvolumen der Luftpolster variiert werden.

Die Herstellung der Walzen beim Sechseckraster kann erfindungsgemäß weitgehend durch die ausbildung nach Anspruch 13 vereinfacht werden. Trotz dieser Vereinfachung zeigt die fertiggestellte Luftpolsterfolie das Sechseckmuster, da sich das Material der Ausformungen nach den den Sechsecken der Randbereiche der Vertiefungen folgenden Schweiß- bzw. Siegelnähten ausrichten wird.

Wie schon erwähnt wurde, kann nach Anspruch 14 wenigstens die Negativwalze mit einer Beschichtung aus isolierendem, einen niedrigen Reibungsbeiwert aufweisendem Material, z.B. Teflon, versehen sein.

Sowohl eine gleichmäßigere Erwärmung der Walzen durch Strahlungsheizkörper auch im Randbereich als auch eine gleichmäßige elektrostatische Oberflächenaufladung bis zum Randbereich läßt sich durch die Ausbildung nach Anspruch 15 erzielen. Auf diese Weise werden sowohl Wärme- als auch Ladungsableitungen von den Außenenden der Walzen weitgehend verringert.

Weitere Einzelheiten und Vorteile des Erfindungsgegenstandes entnimmt man der nachfolgenden Zeichnungsbeschreibung.

In der Zeichnung ist der Erfindungsgegenstand beispielsweise veranschaulicht. Es zeigen
Fig. 1 ein Teilstück einer nach dem erfindungsgemäßen Verfahren hergestellten Luftpolsterfolie in Draufsicht,
Fig. 2 in stark vergrößertem Maßstab einen Teilschnitt durch die Luftpolsterfolie entlang einer Siegelnaht,
Fig. 3 eine zur Durchführung des Verfahrens dienende Vorrichtung im Schema,
Fig. 4 die Negativwalze der Vorrichtung im Längsschnitt,
Fig. 5 eine Seitenansicht zu Fig. 4,
Fig. 6 als Detail einen kleinen Oberflächenbereich der Negativwalze in Ansicht,
Fig. 7 einen Schnitt im Bereich einer Vertiefung der Negativwalze und
Fig. 8 einen der Fig. 7 entsprechenden Schnitt durch die Positivwalze.

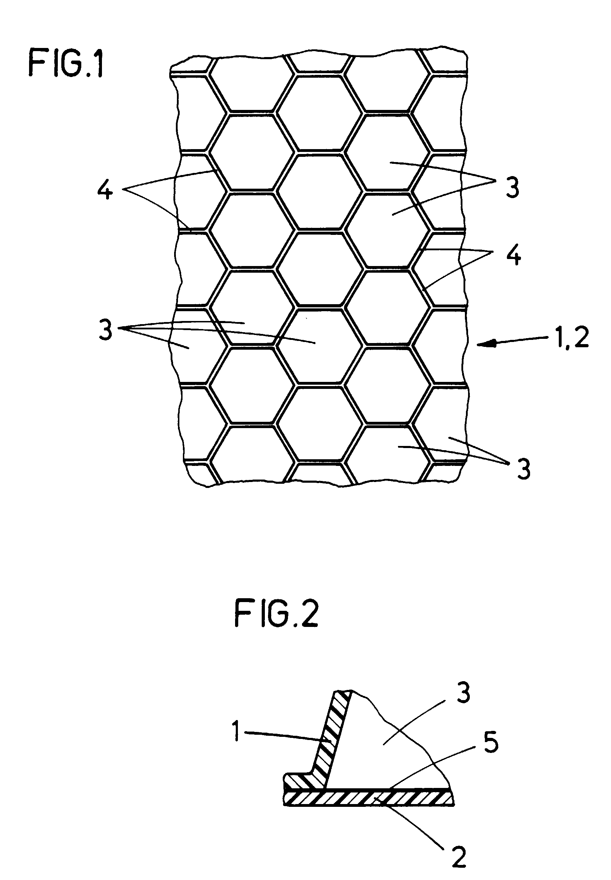

Die Luftpolsterfolie nach den Fig. 1 und 2 besteht aus zwei Folienbahnen 1, 2, die unter Bildung von Luftpolstern 3 durch Schweiß- bzw. Siegelnähte 4 verbunden sind, wobei diese Siegelnähte ein Muster aus aneinandergereihten und in der Reihe jeweils um die halbe Teilung gegenüber benachbarten Reihen versetzten Sechsecken bestimmen. Die Breite der Stege 4 ist dabei kleiner als 1 mm, insbesondere unter 0,8 mm, und zwei Parallelstege verlaufen quer zur Bahn und damit in Längsrichtung einer sie herstellenden Walze. Die Folienbahnen 1, 2 sind vorzugsweise Mono- bzw. Coexblasfolien mit gleicher Festigkeit und Dehnung in Längs- und Querrichtung, die gegenüber LD- und LLD-PE-Folien eine vierfach höhere mechanische Festigkeit aufweisen. Die Deckfolie 2 trägt an der zur anderen Folie 1 weisenden Seite eine dünne Beschichtung 5 aus leichter schweiß- bzw. siegelbarem Material, insbesondere bei Herstellung der Folien 1, 2 aus HDPE hoher Dichte aus VLD-PE oder ULD-PE niedrigerer Dichte, das bei Temperaturen von etwa 100 °C schweiß- bzw. siegelfähig wird.

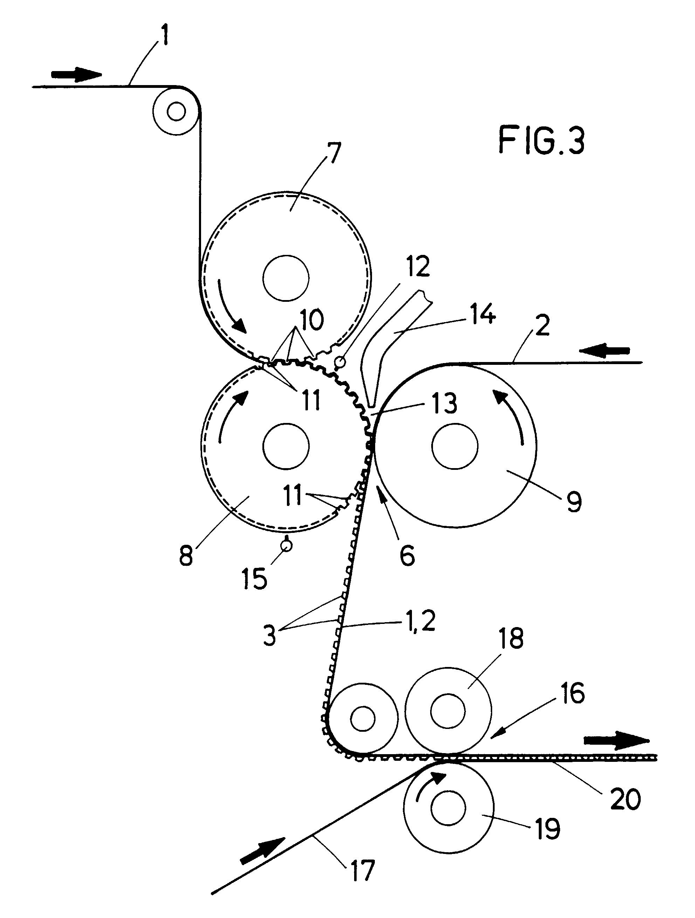

Die Vorrichtung nach Fig. 3 besitzt die hier dargestellte Form- bzw. Verbindungsstation 6, der zumindest zwei Folienbahnen 1 und 2 über Abzugseinrichtungen Zwischenpuffer u.dgl. von Vorratsrollen her zugeführt werden. Die Station selbst besitzt zwei formgebende Walzen 7, 8 und eine meist mit Gummibeschichtung hergestellte Andrückwalze 9. Dabei ist die Walze 7 als Positivwalze am Umfang in einem dem Muster nach Fig. 1 folgenden Muster mit Erhebungen 10 und die Walze 8 als Negativwalze mit angepaßten Vertiefungen 11 versehen, in die diese Erhebungen 10 mit allseitigem Spiel, das gleich oder größer als die Dicke der Folie 1 ist, im Verformungsbereich für die Folie 1 eingreifen und dabei in dieser Folie 1 entsprechende Ausformungen erzeugen, deren Größe überdies durch Einstellung des Achsabstandes der Walzen 7, 8 beeinflußt werden kann. Die Walzen 7 - 9 werden in unterschiedlichem Ausmaß durch nicht dargestellte Strahlungsheizkörper auf die Verformungs- bzw. Schweiß- oder Siegeltemperatur der Folien erwärmt.

Dem Durchlaufbereich der Folie 1 zwischen den Walzen 7, 8 nachgeordnet ist eine über die Länge der Walze 8 reichende Elektrode 11 vorgesehen, an der eine von einem Generator erzeugte Hochspannung anliegt und die sowohl die Folie 1 als auch eine z.B. aus Teflon bestehende Oberflächenbeschichtung der Walze 8 elektrostatisch auflädt, wobei die erzeugten Ausformungen durch das Zusammenwirken dieser Aufladungen in die formgebenden Vertiefungen 11 der Negativwalze 8 eingezogen werden. Die Walze 9 kann mit Hartgummibeschichtung hergestellt sein und führt die Folienbahn 2 dem Eingriffsbereich mit der Walze 8 zu. Im Keilspalt 13 zwischen den Walzen 8 und 9 mündet eine, z.B. als Breitstrahldüse ausgebildete Blasdüse 14, über die Stickstoff zur Füllung der Ausformungen eingeblasen wird, wonach diese Ausformungen durch die Deckfolie 2 zu den Luftpolstern 3 der ablaufenden Luftpolsterfolie 1, 2 nach den Rändern der Vertiefungen 11 folgenden Schweiß- bzw. Siegelnähten 4 (Fig. 1) verschlossen werden. Dem Ablaufbereich der Luftpolsterfolie 1, 2 nachgeordnet ist eine weitere von einem Generator gespeiste Elektrode 14 vorhanden, die die Oberfläche der Negativwalze 8 entlädt bzw. auch dazu dienen kann, eine bestimmte, aber eindeutig definierte Grundladung zu erzeugen.

Wenn nur die Herstellung einer normalen Luftpolsterfolie vorgesehen ist, wird nun die Folie 1, 2, 3 abgezogen und auf einem z.B. aus einer Pappenhülse bestehenden Kern zu versandfertigen Rollen gewickelt.

In Fig. 3 ist eine Variante dargestellt, bei der die Luftpolsterfolie 1, 2, 3 in einer Auftragsstation 16 mit einer weiteren, von einem Vorrat her zugeführten Deckfolie 17 zwischen Druckwalzen 18, 19 zu einer dreischichtigen Luftkammerfolie 20 ergänzt wird, die beidseits Deckfolien aufweist. Die Folie 17 kann aufgeschweißt werden, bevorzugt wird es aber, diese Folie 17 in der Station 16 aufzukaschieren.

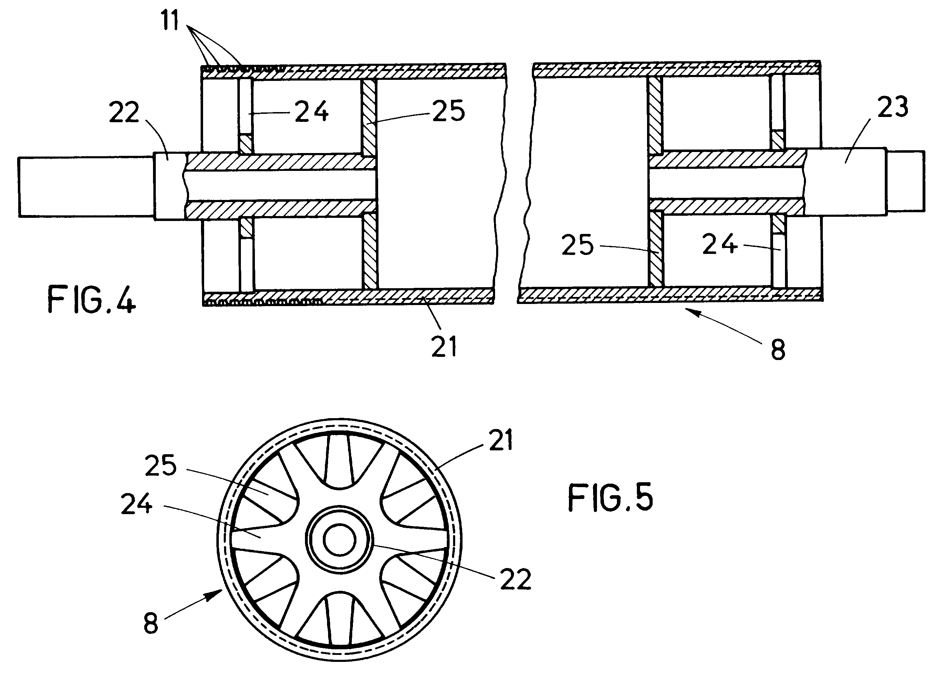

Die Walzen 7 und 8, vorzugsweise aber auch die Walze 9, können den grundsätzlichen Aufbau haben, der in Fig. 4 und 5 für eine Walze 8 gezeigt ist. Dabei besteht der mit den Vertiefungen 11 versehene Mantel der Negativwalze aus einem Rohr 21, das beidseits offen ist. Die der Lagerung und dem Antrieb der Walze 8 dienenden Wellenstummel 22, 23 besitzen einen wesentlich kleineren Durchmesser als das Rohr 21, können selbst zur Verringerung der Masse und damit der Wärmeableitung wenigstens im Rohrbereich als Rohre ausgeführt sein und stützen sich mit sternförmig angeordneten Speichenkörpern 24, 25 innen im Abstand von den Enden am Rohr ab. Es ergeben sich daduch für die Wärmeableitung am Rohr 21 geringe Kontakfflächen und lange Leitungswege und es findet durch die Wellenstummel 22, 23 keine Wärmeableitung von den Rohrenden statt. Wegen des stark herabgesetzten Durchmessers der Wellenstummel 21, 22 gegenüber dem Rohr 21 können diese Wellen auch die elektrostatische Aufladung der Rohr- und damit Walzenoberfläche nicht beeinträchtigen.

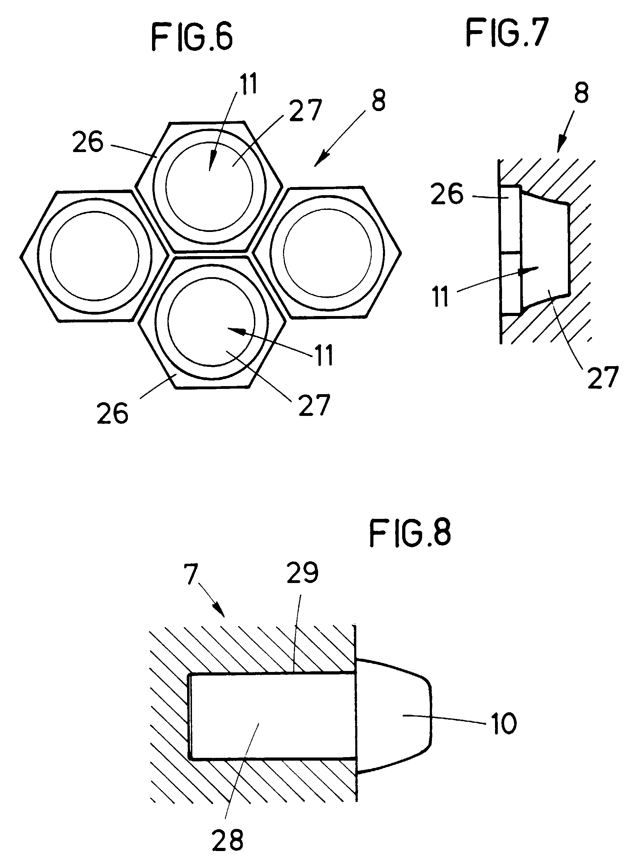

Bei der bevorzugten Ausführung nach den Fig. 6 - 8 sind nur die Randbereiche 26 der Vertiefungen 11 der Negativwalze 8 zur späteren Bildung der Schweißbzw. Siegelnähte 4 im Sechseckmuster vorgesehen, wogegen der übrige Teil 27 der Vertiefungen 11 eine konische, aber nach einer Evolvente gewölbte Grundform aufweist. Zugeordnet sind (siehe Fig. 8) auch die Erhebungen 10 der Positivwalze 7 nur entsprechend den Vertiefungen 27 geformt und ihr Mantel entsprechend gewölbt. Um die Herstellung zu vereinfachen, sind die Erhebungen 10 am Ende von Befestigungsstifen 28 vorgesehen, die einfach in entsprechende Löcher 29 der Positivwalze 7 eingesetzt werden. Die Wandungen der Vertiefungen 26, 27 und der Mantel der Erhebungen 10 ist nach Rollkurven gewölbt, so daß sich ähnlich wie bei Zahnrädern die Oberflächenbereiche der Erhebungen 10 während des Eingriffes stetig an die gegenüberliegenden Flächen der Vertiefungen annähern und sich auch stetig von diesen entfernen und kein schlagartiger Eingriff der Gesamtflächen auftritt.

## Patentansprüche

1. Verfahren zum Herstellen von Luftpolsterfolien, bei dem wenigstens zwei Folienbahnen (1, 2) aus dünnem Niederdruckpolyethylen Verwendung finden und wenigstens die eine (1) bei ihrem Durchlauf zwischen zwei zusammenwirkenden, beheizten Formwalzen (7, 8), deren eine als Negativwalze (8) Vertiefungen (11) und deren andere als Positivwalze (7) konvexe Erhebungen (10) aufweist, in einem Ziehvorgang mit ein über die Bahnbreite verteiltes Muster ergebenden, tiefgezogenen Ausformungen (3) versehen und dann mit der zweiten Folienbahn (2) mittels einer ebenfalls beheizten, am Umfang der Negativwalze (8) der Positivwalze (7) in Durchlaufrichtung nachgeordneten Andrückwalze (9), über welche die zweite Folienbahn (2) läuft, mit dieser zweiten Folienbahn (2) an den Rändern der Ausformungen (3) folgenden Stegen unter Abschluß der Ausformungen zu Luftpolstern durch Schweiß- oder Siegelnähte (4) verbunden wird, dadurch gekennzeichnet, daß die Negativwalze (8) und bzw. oder die über sie geführte Folienbahn (1) eine elektrostatische Aufladung erhalten, welche die Ausformungen (3) vor und während der Bildung der Schweiß- bzw. Siegelnähte (4) in die Vertiefungen (12) der Negativwalze (8) hineinzieht und festhält.

2. Verfahren nach Anspruch 1, dadurch gekennzeichnet, daß die Aufladung der mit einer ein Dielektrikum bildenden Beschichtung (5) versehenen Negativwalze (8) durch über die Länge der Negativwalze (8) reichende und im Abstand von dieser Walze (8) nach der Positivwalze (7), aber vor dem Eingriffsbereich der Andrückwalze (9) angebrachte, unter Hochspannung stehende Elektroden (12) erzeugt wird und die Aufladung der Walze (8) durch am Umfang der Andrückwalze (9) nachgeordnete, Elektroden (15) unterschiedlicher Polarität entfernt bzw. neutralisiert wird.

3. Verfahren nach Anspruch 1 oder 2, dadurch gekennzeichnet, daß die Schweiß- bzw. Siegelnähte (4) mit gleichbleibender, maximaler Stegbreite von 1 mm, vorzugsweise unter 0,8 mm, erzeugt werden.

4. Verfahren nach einem der Ansprüche 1 - 3, dadurch gekennzeichnet, daß die Schweiß- bzw. Siegelnähte (4) den Rändern der Ausformungen (3) folgend in einem Muster aus aneinandergereihten regelmäßigen Sechsecken angebracht werden, bei denen zwei Parallelseiten quer zur Bahnlängsrichtung, also parallel zur Walzenachse verlaufen.

5. Verfahren nach einem der Ansprüche 1 - 4, dadurch gekennzeichnet, daß Blas-Folienbahnen (1, 2) aus Niedruckpolyethylen hoher Dichte (HDPE mit 0,94 - 0,96 g/cm³) und einer Dicke unter 15 µ, insbesondere Mono- bzw. Coexblasfolien mit gleicher Festigkeit und Dehnung in Längs- und Querrichtung eingesetzt werden, wobei die Deckfolienbahn (2) verbindungsseitig eine dünne, z.B. ein µ dicke Auflage (5) aus einen tieferen Schmelzpunkt aufweisendem Hochdruckpolyethylen oder einem Copolymer geringerer Dichte aufweist.

6. Verfahren nach einem der Ansprüche 1 - 5, dadurch gekennzeichnet, daß für wenigstens eine der Folienbahnen (1, 2) ein eine Permeabilität für Sauerstoff aufweisendes Material verwendet wird und die Ausformungen (3) bei ihrem Abschluß zu den Luftpolstern eine Stickstoffüllung erhalten.

7. Verfahren nach Anspruch 6, dadurch gekennzeichnet, daß der Stickstoff in dem zulaufseitig zwischen Negativ- und Andrückwalze (8, 9) gebildeten Walzenspalt (13) eingeblasen wird.

8. Verfahren nach einem der Ansprüche 1 - 7, dadurch gekennzeichnet, daß nach dem Austritt der Luftpolsterfolie aus der Negativ- und Andrückwalze (8, 9) auf die Außenseite der nun Teile der Luftpolster bildenden Ausformungen (3) mittels weiterer Walzen (18, 19) eine weitere Deckfolie (17) aufgesiegelt, -geschweißt oder -geklebt wird.

9. Vorrichtung zur Durchführung des Verfahrens nach einem der Ansprüche 1 - 8, mit Zufuhreinrichtungen für wenigstens zwei Folienbahnen (1, 2) zu einer Form- und Verbindungsstation und Abzugseinrichtungen für die fertige Luftpolsterfolie (20), wobei in der Form- und Verbindungsstation zwei zusammenwirkende, beheizte Formwalzen (7, 8), deren eine als Negativwalze (8) Vertiefungen (11) und deren andere als Positivwalze (7) konvexe Erhebungen (10) aufweist, vorgesehen sind, zwischen denen die eine Folie (1) beim Durchlauf in einem Ziehvorgang mit ein über die Bahnbreite verteiltes Muster ergebenden tiefgezogenen Ausformungen (3) versehen und dann mit der zweiten Folienbahn (2) mittels einer ebenfalls beheizten, am Umfang der Negativwalze (8) der Positivwalze (7) in Durchlaufrichtung nachgeordneten Andrückwalze (9), über welche die zweite Folienbahn (2) läuft, mit dieser zweiten Folienbahn (2) an den Rändern der Ausformungen (3) folgenden Stegen unter Abschluß der Ausformungen zu Luftpolstern durch Schweiß- oder Siegelnähte (4) verbunden wird, dadurch gekennzeichnet, daß die konvexen Erhebungen (10) der Positivwalze (7) im Eingriffsbereich mit allseitigem Spaltabstand, der gleich oder größer ist als die Dicke der über die Negativwalze (8) zulaufenden Folienbahn (1), in die Vertiefungen (11) der Negativwalze (8) eingreifen, daß vor dem Eingriffsbereich der Andrückwalze (9) ein wenigstens über die Walzenlänge reichende, mit einem Generator verbundene Elektrode (12) zur elektrostatischen Aufladung der Negativwalze (8) bzw. der Folienbahn (1) dieser Negativwalze (8) zugeordnet angebracht ist und daß ein weiterer Generator mit Elektrode (15) zur Entladung der Negativwalze (8) nach der Ablaufstelle der durch die Schweiß- oder Siegelnähte (4) zur Luftpolsterfolie (1, 2, 3) verbundenen Folienbahn vorgesehen ist.

10. Vorrichtung nach Anspruch 9, dadurch gekennzeichnet, daß im zulaufseitig zwischen Negativwalze (8) und Andrückwalze (9) und den auf ihnen geführten Folienbahnen (1, 2) gebildenden Keilspalt (13) eine Einblasdüse (14) für Stickstoff angebracht ist.

11. Vorrichtung nach Anspruch 9 oder 10, dadurch gekennzeichnet, daß die Wandungen der Erhebungen (10) der Positivwalze (7) und der Vertiefungen (26, 27) der Negativwalze (8) ähnlich wie die Zähne korrigierter Zahnräder nach durch Rollkurven, z.B. Evolventen, bestimmten Erzeugenden gewölbt sind.

12. Vorrichtung nach einem der Ansprüche 9 - 11, dadurch gekennzeichnet, daß der Achsabstand der Positivwalze (7) und der Negativwalze (8) zur Einstellung der Luftpolstergröße einstellbar ist.

13. Vorrichtung nach einem der Ansprüche 9 - 12, dadurch gekennzeichnet, daß nur die Randbereiche (26) der Vertiefungen (11) der Negativwalze (8) ein Muster aus aneinandergereihten regelmäßigen Sechsecken bilden und gegen das Innere der Vertiefungen zu in in der Grundform konische, aber nach der Rollkurve gewölbte Bereiche (27) übergehen und die Erhebungen der Positivwalze (7) eine dem Inneren (27) der Vertiefungen (12) angepaßte runde Grundform aufweisen.

14. Vorrichtung nach einem der Ansprüche 9 - 13, dadurch gekennzeichnet, daß wenigstens die Negativwalze (8) mit einer Beschichtung (5) aus isolierendem, einen niedrigen Reibungsbeiwert aufweisendem Material, z.B. Teflon, versehen ist.

15. Vorrichtung nach einem der Ansprüche 9 - 14, dadurch gekennzeichnet, daß wenigstens die Negativwalze (8), vorzugsweise aber auch die Positivwalze (7) und die Andrückwalze (9) aus Rohren (21) bestehen, in welche die einen wesentlich kleineren Durchmesser aufweisenden Antriebs- oder Führungswellen (22, 23) einragen und innerhalb der Walze mit Abstand von deren Enden mit dem Außenrohr (21) über sternförmig angebrachte Speichen (24, 25) oder Träger verbunden sind.
